Europäisches Patentamt

European Patent Office

Office européen des brevets

(11) Veröffentlichungsnummer: **0 478 972 A2**

# (12) EUROPÄISCHE PATENTANMELDUNG

(21) Anmeldenummer: **91114894.8**

(22) Anmeldetag: **04.09.91**

(51) Int. Cl.5: **F02D 41/38**, F02D 41/14, F02D 41/40

(30) Priorität: **04.10.90 DE 4031368**

(43) Veröffentlichungstag der Anmeldung:
**08.04.92 Patentblatt 92/15**

(84) Benannte Vertragsstaaten:
**DE FR GB**

(71) Anmelder: **ROBERT BOSCH GMBH**
**Postfach 30 02 20**
**W-7000 Stuttgart 30(DE)**

(72) Erfinder: **Stumpp, Gerhard, Dipl.-Ing.**

Bogenstrasse 29H
**W-7000 Stuttgart 80(DE)**
Erfinder: **Wessel, Wolf, Ing. grad.**
**Mühlstrasse 27**
**W-7141 Oberriexingen(DE)**
Erfinder: **Müller, Norbert, Dipl.-Ing.**
**Tübinger Strasse 4**
**W-7146 Tamm(DE)**
Erfinder: **Fenchel, Reinhard, Dipl.-Ing.**
**Turnstrasse 31**
**W-7250 Calw-Altburg(DE)**

(54) **Steuersystem für eine Dieselbrennkraftmaschine.**

(57) Es wird ein Steuersystem für eine Dieselbrennkraftmaschine vorgeschlagen. Dieses System umfaßt eine erste Stelleinrichtung (80), die den Beginn der Kraftstoffeinspritzung bestimmt sowie eine zweite Stelleinrichtung (120), die die einzuspritzende Kraftstoffmenge bestimmt. Ein Regler vergleicht (70) einen Sollwert (SBS) für den Spritzbeginn mit einem Istwert (SBI) für den Spritzbeginn und steuert abhängig von dieser Regeldifferenz die erste Stelleinrichtung (80) an. Bei offenem Regelkreis wird aus der Abweichung zwischen einem zu erwartetedem Wert (SBIi) für den Spritzbeginn und dem Istwert (SBI) für den Spritzbeginn ein Differenzspritzbeginn (DSB) bestimmt.

FIG. 1

## Stand der Technik

Die Erfindung betrifft ein Steuersystem für eine Dieselbrennkraftmaschine gemäß dem Oberbegriff des Anspruchs 1.

Ein solches Steuersystem ist aus "Bosch Technische Unterrichtung Dieseleinspritztechnik im Überblick" bekannt. Dort wird ein Steuersystem für eine Diesel-Brennkraftmaschine beschrieben. Dieses System umfaßt eine erste Stelleinrichtung, die den Beginn der Kraftstoffeinspritzung bestimmt. Ein Nadelbewegungsfühler erfaßt den tatsächlichen Einspritzbeginn. Ein erster Regler vergleicht diesen Wert mit einem vorgegebenen Sollwert und erzeugt ein Ansteuersignal zur Ansteuerung der ersten Stelleinrichtung. Ein zweiter Regelkreis steuert eine zweite Stelleinrichtung an, die die der Brennkraftmaschine zugeführte Kraftstoffmenge festlegt.

Durch Fehler im Bereich des ersten Regelkreises, der den Spritzbeginn beeinflußt, ergibt sich eine Regeldifferenz. Diese Regeldifferenz zwischen Spritzbeginn-Sollwert und erfaßtem Spritzbeginn-Istwert wird im Betrieb ständig ausgeregelt. Dieses ständige Ausregeln bewirkt aber eine entsprechende Verschiebung der ersten Stelleinrichtung.

Da aber bei verschiedenen Steuersystemen die Fördermenge von der Stellung der ersten Stelleinrichtung abhängt, ergibt sich abhängig von dem Fehler eine unterschiedliche Einspritzmenge bei gleicher Einstellung des Mengenstellwerks. Dies ist insbesondere dann der Fall, wenn es sich bei der ersten Stelleinrichtung um einen Hubschieber handelt.

Aus der DE-OS 30 11 595 (US-A 4 426 980) ist eine Einrichtung zur Korrektur von Drifterscheinungen bei einem Mengenstellwerk bekannt. Durch Alterungserscheinungen verändert sich die Zuordnung zwischen dem Ist-Signal des Mengenregelkreises und der tatsächlich eingespritzten Kraftstoffmenge. Durch Aufschalten eines Offset-Signals wird der Fehler in der Istwerterfassung ausgeglichen. Die Erfassung des Fehlers erfolgt im Leerlauf.

## Aufgabe der Erfindung

Der Erfindung liegt die Aufgabe zugrunde, bei einem Steuersystem der eingangs genannten Art diese Fehler bei der Mengenzumessung auszugleichen. Diese Aufgabe wird durch die im Anspruch 1 gekennzeichneten Merkmale gelöst.

## Vorteile der Erfindung

Das erfindungsgemäße System garantiert eine konstante Einspritzmenge unabhängig von Fehlern im Bereich der Regelung des Einspritzzeitpunktes. Vorteilhafte und zweckmäßige Ausgestaltung der Erfindung sind in den Unteransprüchen gekennzeichnet.

## Zeichnung

Die Erfindung wird nachstehend anhand der in der Zeichnungen dargestellten Ausführungsformen erläutert. Figur 1 zeigt ein Blockschaltbild des erfindungsgemäßen Regelsystems. Figur 2 zeigt die Auswirkung verschiedener Fehler. In Figur 3 ist ein Teil der Recheneinheit näher dargestellt. In der Figur 4 ist ein Flußdiagramm zur Verdeutlichung des erfindungsgemäßen Systems aufgezeigt.

## Beschreibung des Ausführungsbeispiels

Im folgenden wird das erfindungsgemäße System am Beispiel einer Hubschieberpumpe beschrieben. Das erfindungsgemäße System ist aber nicht auf die Verwendung bei einer Hubschieberpumpe beschränkt. Dieses System kann auch bei anderen Hochdruckkraftstoffpumpe, bei denen sich der Spritzbeginn und die eingespritzte Kraftstoffmenge unabhängig voneinander einstellen lassen, verwendet werden.

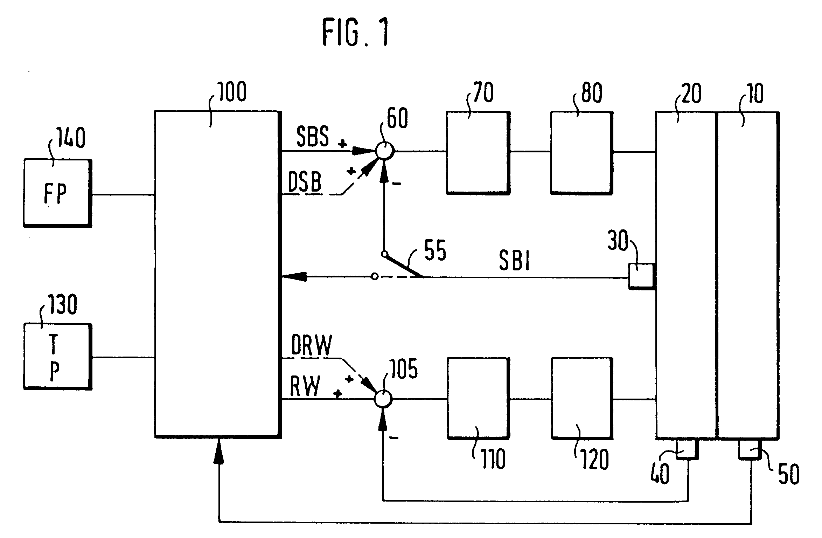

Figur 1 zeigt das Blockschaltbild des erfindungsgemäßen Zumeßsystems. Über einen Regelkreis, auch als Spritzbeginnregelkreis bezeichnet, wird eine den Förderbeginn bzw. den Spritzbeginn bestimmende erste Stelleinrichtung, auch als erstes Stellwerk bezeichnet eingestellt. Über einen zweiten Regelkreis, auch als Mengenregelkreis bezeichnet, wird eine die einzuspritzende Kraftstoffmenge bestimmende zweite Stelleinrichtung, auch als zweites Stellwerk bezeichnet, eingestellt. Eine Brennkraftmaschine erhält über eine Hochdruckkraftstoffpumpe 20 den zur Verbrennung notwendigen Kraftstoff zugeführt.

Ein Sensor 30 z.B. ein Nadelbewegungsfühler erfaßt dabei den jeweiligen Beginn der Kraftstoffeinspritzung. Ein weiterer Sensor 40 erfaßt ein Signal, das der Menge des der Brennkraftmaschine 10 Zugeleiteten Kraftstoffs entspricht. Verschiedene Sensoren 50 erfassen den Betriebszustand der Brennkraftmaschine 10. So ist zum Beispiel ein Sensor vorgesehen, der ein Signal abgibt, das der Drezahl N der Brennkraftmaschine 10 entspricht.

Das Ausgangssignal des Sensors 30 gelangt über eine Schalteinrichtung 55 wahlweise zu einer Recheneinheit 100 oder zu einem ersten Additionspunkt 60. Der Ausgang des Additionspunkt steht mit dem Eingang eines Reglers 70, der ein erstes Stellwerk 80 ansteuert, in Verbindung. Am zweiten Eingang des Additionspunktes 60 liegen die Ausgangssignale SBS sowie DSB der Recheneinheit 100.

Das Ausgangssignal des Sensors 40 gelangt über einen zweiten Additionspunkt 105 zum zweiten Regler 110. Am zweiten Eingang des Additionspunktes 105 liegen die Ausgangssignale RW und DRW der Recheneinheit 100. Abhängig vom Ausgangssignal der Additionsstufe 105 erzeugt der Regler 110 ein Signal für das zweite Stellwerk 120, das die Menge der einzuspritezenden Kraftstoffmenge bestimmt. Neben dem Ausgangssignal des Sensors 50 gelangen die Signale eines Sensors 130 sowie einer Einrichtung 140 zur Recheneinheit 100.

Dieses System arbeitet nun wie folgt. Die Recheneinheit 100 berechnet abhängig von verschiedenen Eingangssignalen einen ersten Sollwert SBS für den Einspritzbeginn und einen zweiten Sollwert RW für die Regelstangenposition.

Diese Berechnung erfolgt abhängig von verschiedenen Betriebsparametern der Brennkraftmaschine bzw. Umwelteinflüssen. Dies sind zum Beispiel Größen wie die Drehzahl N, verschiedene Temperaturwerte T oder verschiedene Druckwerte P. Zur Erfassung dieser Größen dienen verschiedene Sensoren 50, 130. Desweiteren wird zur Sollwertbildung noch ein Signal, das den Fahrerwunsch anzeigt, herangezogen. Ein solches Signal liefert die Einrichtung 140.

Bei dem ersten Stellwerk 80, das den Einspritzzeitpunkt festlegt, handelt es sich bei diesem Ausführungsbeispiel um einen Hubschieber. Mit einer solchen Hubschieberpumpe kann der Spritzbeginn weitgehend unabhängig von der einzuspritzenden Kraftstoffmenge eingestellt werden. Bei dem Sensor 30, der den tatsächlichen Spritzbeginn SBI erfaßt, handelt es sich vorzugsweise um einen sogenannten Nadelbewegungsfühler. Es können aber auch andere Fühler verwendet werden, die ein zuverlässiges Spritzbeginnsignal liefern.

Dieses Spritzbeginn-Istsignal kann über die Schalteinrichtung 55 wahlweise auf den Additionspunk 60 bzw. zur Recheneinheit 100 weiter geleitet werden. Im normalen Betrieb befindet sich der Schalter in der eingezeichneten Position. Das Signal SBI, das den tatsächlichen Spritzbeginn charakterisiert, gelangt dann mit negativem Vorzeichen zum Additionspunkt 60. Dieser berechnet die Regeldifferenz aus Spritzbeginn-Sollwert SBS und dem gemessenen Spritzbeginn SBI. Abängig von dieser Regeldiffernz erzeugt der erste Regler 70 ein Ansteuersignal für den Hubschieber.

Desweiten ermittelt die Recheneinheit 100 ein Sollsignal für den Stellwerksregler. Dieses Signal RW wird im Additionspunkt 105 mit einem vom Sensor 40 erfaßten Signal verglichen. Dieses Signal gibt die tatsächliche Position der Regelstange an. Abhängig von diesem Vergleich erzeugt der Regler 110 ein Stellsignal für das zweite Stellwerk 120, um die Regelstange entsprechend zu verschieben.

Bei herkömmlichen Systemen können im Spritzbeginnregelkreisen eine Vielzahl von Fehlern auftreten. Diese Fehler können in zwei Klassen eingeteilt werden. Zum einen sind dies zufällige Fehler und zum anderen systematische Fehler.

Die zufälligen Fehler sind von Pumpe zu Pumpe bzw. von Pumpenelement zu Pumpenelement unterschiedlich. Die systematischen Fehler sind bei allen Pumpen des selben Typs gleich. Diese Fehler hängen aber von unterschiedlichen Betriebsparametern, die sich laufend ändern können, ab. Ein solcher Parameter ist zum Beispiel die Kraftstofftemperatur.

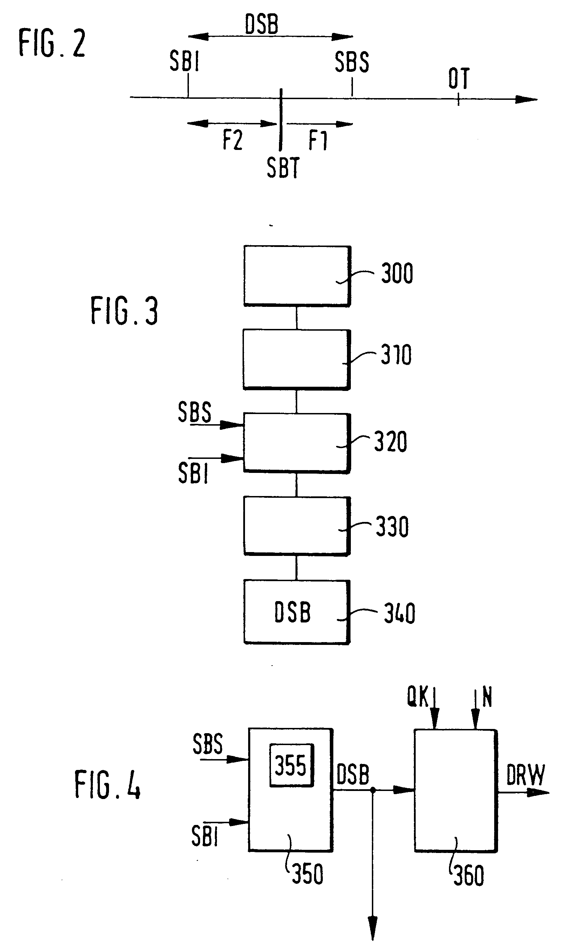

Die Auswirkungen dieser Fehler sind nun in der Figur 2 dargestellt. Hierzu sind verschiedene Signale über der Zeit im Bezug auf den oberen Totpunkt OT aufgetragen. Zum Zeitpunkt SBS soll die Einspritzung erfolgen. Bei einem fehlerfreien ausgeregelten System stimmen dann der tatsächliche Spritzbeginnwert SBT, der gemessen Spritzbeginnwert SBI und der Sollwert SBS überein. Bei einem fehlerbehafteten System ist dies aber, wie hier dargestellt, nicht der Fall.

Verschiedene Fehler F1 bewirken, daß bei offenem Regelkreis der tatsächliche Spritzbeginn SBT nicht mit dem gewünschten Spritzbeginnsollwert SBS übereinstimmt. Bei geschlossenem Regelkreis hat dies zur Folge, daß die drei Spritzbeginnwerte (SBI, SBT und SBS) gleich sind, jedoch die applizierte Hubschieberlage nicht stimmt. Dies bedeutet der Hubschieber nimmt bei gleichem Spritzbeginn abhängig von dem Fehler F1 unterschiedliche Positionen ein. Bei diesen Fehlern handelt es sich um Pumpenanbaufehler, Förderbeginnblockierfehler, Hochdruckhydraulikfehler sowie Fehler die durch unterschiedliche Durchmesser der Kraftstoffleitungen bedingt sind.

Durch den Fehler F2 ergibt sich bei offenem Regelkreis eine Abweichung zwischen dem gemessenen Spritzbeginn SBI und dem tatsächlichen Spritzbeginn SBT. Dies sind Fehler verursacht durch den Nadelbewegungsfühler, die sich daran anschließende Auswerteschaltung sowie Fehler des Drehzahlgebers und der übrigen Auswerteschaltung.

Diese Fehler verursachen bei geschlossenem Regelkreis eine Regeldifferenz, auch als Differenzsspritzbeginn DSB bezeichnet, im ersten Regelkreis. Im Normalbetrieb das heißt bei geschlossenem Regelkreis regelt das System diese Regeldifferenz aus. Die Einspritzung erfolgt zum vorgesehenen Zeitpunkt. Es ergibt sich aber eine der Regeldifferenz proportionalen Verschiebung der Hubschieberlage. Diese Verschiebung der Hubschieberlage hat zur Folge, daß sich die eingespritzte Kraftstoffmenge ändert. Dies Änderung der Kraftstoffmenge beruht darauf, daß die eingespritzte Kraftstoffmenge nicht nur von der Regelstangenposition sondern auch noch von der Drehzahl und der Hubschieberlage abhängt.

Die zufälligen Fehler sind von Exemplar zu Exemplar unterschiedlich. Dadurch ergibt sich von Exemplar zu Exemplar eine unterschiedliche eingespritzte Kraftstoffmenge bei gleichen Ansteuersignalen. Den selben Effekt haben verschiedene systematische Fehler, die für alle Pumpenexemplare gleich sind, sich aber im Laufe der Betriebszeit der Pumpe ändern können. Solche Fehler werden zum Beispiel verursacht durch unterschiedliche Kraftstoffsorten, Düsenöffnungsdruckänderungen oder die Kraftstofftemperatur.

Diese Beeinflussung der Kraftstoffmenge kann nur dann ausgeglichen werden, wenn die Größe des Fehlers DSB, auch als Differenzsspritzbeginn bezeichnet, bekannt ist. Dieser Fehler DSB wird gemäß dem Flußdiagramm der Figur 3 ermittelt. In einem ersten Schritt 300 wird überprüft, ob sich das Zumeßsystem in einem Zustand befindet, indem die Überprüfung durchgeführt werden kann. Ein solcher Zustand liegt zum Beispiel vor, wenn sich der Hubschieber in einer seiner Anschlagspositionen befindet. Besonders vorteilhaft erfolgt eine Überprüfung, wenn sich der Hubschieber im Spätanschlag befindet. Die zufälligen Fehler sind bei einem Exemplar über die ganze Lebensdauer der Pumpe konstant. Aus diesem Grund ist es vorteilhaft, diese zufälligen Fehler am Ende der Fertigung zu erfassen. Ferner ist es vorteilhaft, nach Arbeiten an der Kraftstoffpumpe insbesondere Reparaturarbeiten den Fehler zu ermitteln. Besonders vorteilhaft ist also ein Ermittlung der zufälligen Fehler am Bandende und beim Service.

Die Kompensation der systematischen Fehler wird besonders vorteilhaft in vorgegebenen Abständen, oder bei Vorliegen bestimmter Betriebsbedingungen, zum Beispiel wenn sich der Spritzbeginnversteller nahe am Anschlag befindet, durchgeführt. Dann kann zum Ausmessen der jetzt nur noch systematischen Spritzbeginnfehler, der Regelkreis geöffnet werden.

Liegen eine dieser Bedingungen vor, so wird im Schritt 310 von Regelung auf Steuerung des Spritzbeginns übergegangen. Vorzugsweise wird der Hubschieber auf Spätanschalg eingestellt. Der Schalter 55 wird in die gestrichelte Position übergeführt. Im Schritt 320 wird dann der tatsächliche Spritzbeginn SBI erfaßt.

Im Schritt 330 wird die Differenz zwischen tatsächlichem Spritzbeginn SBI und dem zu erwartenden Spritzbeginn SBIi berechnet. Der zu erwartende Spritzbeginn SBIi ist derjenige Spritzbeginn, der bei den vorliegenden Betriebsparametern zu erwarten ist. Der zu erwartende Spritzbeginn SBIi entspricht dem Spritzbeginnsollwert für die vorliegenden Betriebsparameter.

Dieses Signal wird als Differenzspritzbeginn DSB im Schritt 340 abgespeichert. Dabei ist es vorteilhaft, wenn der Speicher von solcher Bauart ist, daß er seinen Inhalt beim Abschalten der Brennkraftmaschine nicht verliert.

In Figur 4 ist nun dargestellt, wie der Einfluß des Fehlers auf die zugemessene Kraftstoffmenge im laufenden Betrieb kompensiert wird. Die Berechnung des Differenzspritzbeginns DSB erfolgt in einer Einrichtung 350 abhängig vom zu erwartenden Spritzbeginn SBIi und dem tatsächlich erfaßten Spritzbeginn SBI. Diese Einrichtung ist üblicherweise in die Recheneinheit 100 integriert. Ferner umfaßt sie auch den Speicher 355, in dem der Differenzspritzbeginn DSB dauerhaft abgelegt werden. Im einfachsten Fall wird der Differenzspritzbeginn DSB über den Additionspunkt 60 mit negativem Vorzeichen dem Spritzbeginnregelkreis zugeführt.

Durch ein entsprechendes Aufschalten des Signals auf den Spritzbeginnsollwert SBS bzw. auf den Spritzbeginnistwert SBI kann der Fehler im Spritzbeginnregelkreis kompensiert werden. Dadurch wird erreicht, daß sich beim Soll-Spritzbeginn SBS die ursprünglich applizierte Hubschieberlage einstellt. Bei vorgegeben Sollwert ergibt sich unabhängig von Fehlern immer die gleiche Hubschieberlage. Es erfolgt keine Verstellung des Hubschiebers abhängig von Fehlern und der Fehler bei der Kraftstoffmenge ist kompensiert. Der Spritzbeginn Regelkreis wird zwar um den Differenzspritzbeginn DSB verstimmt, über alle Zylinder bleibt die Toleranz jedoch klein.

Auf der anderen Seite ist es aber auch vorteilhaft, wenn in einem Kennfeld 360 abhängig von dem Differenzspritzbeginn DSB Korrekturwerte DRW abgelegt sind. Besonders vorteilhaft ist es, wenn diese Korrekturwerte (Differenzregelweg DRW) abhängig vom Differezspritzbeginn DSB und eventuell weiteren Größen wie der gewünschten Kraftstoffmenge und der Drehzahl abgelegt sind. Mittels dieses Differenzregelwegs DRW läst sich der Einfluß der veränderten Hubschieberlage so korrigieren, daß sich die Fehler in dem Spritzbeginnregelkreis nicht auf die Kraftstoffmenge auswirken. Dieses Signal der Differenzregelweg DRW wird, wie in Figur 1 gestrichelt dargestellt, am Additionspunkt 105 in den Mengenregelkreis eingespeist.

Üblicherweise wird nur jeweils eine der beiden Möglichkeiten verwendet. Dies ist dadurch dargestellt, daß in Figur 1 die Signale DSB und DRW gestrichelt eingezeichnet sind.

Besonders vorteilhaft ist es, wenn die zufälligen Fehler durch Aufschalten des Differenzspritbeginns DSB und die systematischen Fehler durch aufschalten des Differenzregelwegs DRW kompensiert werden.

Besonders vorteilhaft ist eine zylinderspezifische Korrektur, bei der diese Korrektur für jedes Pumpenelement getrennt erfolgt. Dazu ist es aber nötig, daß für jeden Zylinder ein Spritzbeginnistwertgeber 30 vorhanden ist.

Das erfindungsgemäße System ist nicht auf die Verwendung bei Hubschieberpumpen beschränkt. So ist es auch denkbar, daß dieses System bei anderen Pumpentypen zum Beispiel bei magnetventilgesteuerten Pumpen Verwendung findet. In diesem Fall müssen entsprechende Signale zur Auswertung herangezogen werden. So wird bei diesen Systemen nicht das Regelwegsignal sondern ein Signal bezüglich der Einspritzdauer verwendet. So ist es vorteilhaft bei solchen Systemen die Ansteuerzeitpunkte der Magnetventile auszuwerten.

**Patentansprüche**

1. Steuersystem für eine Dieselbrennkraftmaschine, mit einer ersten Stelleinrichtung (80), die den Beginn der Kraftstoffeinspritzung bestimmt und einer zweiten Stelleinrichtung (120), die die einzuspritzende Kraftstoffmenge bestimmt, wobei ein Regler (70) abhängig von einer Regeldifferenz zwischen einem Sollwert (SBS) für den Spritzbeginn und einem Istwert (SBI) für den Spritzbeginn die erste Stelleinrichtung (80) ansteuert, dadurch gekennzeichnet, daß bei offenem Regelkreis aus der Abweichung zwischen einem zu erwartendem Wert (SBIi) für den Spritzbeginn und dem Istwert (SBI) für den Spritzbeginn ein Differenzspritzbeginn (DSB) gewonnen wird.

2. Steuersystem nach Anspruch 1, dadurch gekennzeichnet, daß es sich bei der ersten Stelleinrichtung um einen Hubschieber handelt.

3. Steuersystem nach Anspruch 1 oder 2, dadurch gekennzeichnet, daß am Bandende und beim Service der Differenzspritzbeginn (DSB) abhängig von zufälligen Fehlern erfaßt wird.

4. Steuersystem nach einem der vorhergehenden Ansprüche, dadurch gekennzeichnet, daß bei der Erfassung des Differenzspritzbeginns (DSB) der Hubschieber sich am Spätanschlag befindet.

5. Steuersystem nach einem der vorhergehenden Ansprüche, dadurch gekennzeichnet, daß im laufenden Betrieb der Differenzspritzbeginn (DSB) abhängig von systematischen Fehlern erfaßt wird.

6. Steuersystem nach einem der vorhergehenden Ansprüche, dadurch gekennzeichnet, daß mittels des Differenzspritzbeginns (DSB) der Einfluß der systematischen und der zufälligen Fehler auf die der Brennkraftmaschine zugemessene Kraftstoffmenge ausgeglichen wird.

7. Steuersystem nach einem der vorhergehenden Ansprüche, dadurch gekennzeichnet, daß der Differenzspritzbeginn (DSB) zum Istwert und/oder zum Sollwert für den Spritzbeginn hinzu addiert wird.

8. Steuersystem nach einem der vorhergehenden Ansprüche, dadurch gekennzeichnet, daß wenigstens abhängig vom Differenzspritzbeginn (DSB) ein Differenzregelweg (DRW) bestimmt wird, der zur Korrektur des der zweiten Stelleinrichtung zugeführte Signals dient.

9. Steuersystem nach einem der vorhergehenden Ansprüche, dadurch gekennzeichnet, daß der Ausgleich der zufälligen Fehler durch Aufschalten des Differenzspritzbeginns (DSB) und und der Ausgleich der systematischen Fehler durch Aufschalten des Differenzregelwegs (DRW) kompensiert werden.

10. Steuersystem nach einem der vorhergehenden Ansprüche, dadurch gekennzeichnet, daß der Differenspritzbeginn (DSB) zylinderspezifisch erfaßt werden.

FIG. 1

FIG. 2

FIG. 3

FIG. 4